# EUROPÄISCHE PATENTSCHRIFT

(11) **EP 1 920 522 B1**
(45) Veröffentlichungstag und Bekanntmachung des Hinweises auf die Patenterteilung: **15.04.2009**
(21) Anmeldenummer: 06792628.7
(22) Anmeldetag: 01.08.2006
(51) Int. Cl.: H02K 5/15

(54) **ROTORABDECKUNG UND ELEKTROMOTOR**
ROTOR COVER AND ELECTRIC MOTOR
ELEMENT DE RECOUVREMENT DE ROTOR ET MOTEUR ELECTRIQUE

(30) Priorität: 23.08.2005 DE 102005039884
(43) Veröffentlichungstag der Anmeldung: 14.05.2008
(73) Patentinhaber: BSH Bosch und Siemens Hausgeräte GmbH, 81739 München (DE)
(72) Erfinder: KALAVSKY, Michal, 04023 Kosice (SK); SKRIPPEK, Jörg, 14641 Priort (DE); VALO, Robert, 07101 Michalovce (SK)
(86) Internationale Anmeldenummer: PCT/EP2006/064883
(87) Internationale Veröffentlichungsnummer: WO 2007/023070

(56) Entgegenhaltungen:
- EP-A1- 1 231 701
- EP-A2- 1 383 227
- DE-A1- 3 438 747
- US-A- 3 873 861

## Beschreibung

Die vorliegende Erfindung betrifft eine Rotorabdeckung, insbesondere eine Rotorabdeckung für einen Elektromotor für wasserführende Haushaltsgeräte sowie einen Elektromotor, insbesondere für wasserführende Haushaltsgeräte.

Bei Elektromotoren kann es dazu kommen, dass Schmutzpartikel, die in der Umgebung des Elektromotors vorhanden sind, in das Innere des Motors gelangen und gegebenenfalls zu Störungen führen. Insbesondere bei Elektromotoren, deren Rotor mit Permanentmagneten oder Elektromagneten ausgeführt ist, können metallische Partikel durch die Magnete angezogen werden, zwischen Rotor und Stator des Elektromotors gelangen und dort Schäden verursachen.

Um dies zu verhindern können Lagerschilde verwendet werden, die vollständig geschlossen sind und somit Stator und Rotor des Motors abdecken. Der Nachteil solcher geschlossenen Lagerschilde besteht darin, das Stator und Rotor nicht durch ein diese durchströmendes Kühlmedium, wie beispielsweise die Umgebungsluft oder ein von einer durch den Motor angetriebenen Pumpe geförderten Flüssigkeit, gekühlt werden können, wodurch es zu einem Temperaturanstieg und dadurch zu einem geringeren Leistungsgewinn kommt.

Weiterhin ist aus der DE 1 797 835 U eine Nutenisolation für den Anker und den Ständer einer elektrischen Maschine bekannt, bei dem Isolierstäbe in die Ankemuten eingebracht werden und anschließend ein korbartiger Nutenschließer mit Nutenverschlusskeilen in die Nuten des Ankers eingeschoben wird. Dieser Nutenschließer ist auf der Welle gelagert und rotiert mit dem Rotor der elektrischen Maschine. An den Stator dieser Maschine wird ebenfalls ein Nutenschließer in die Nuten des Stators eingebracht. Dieser ist zweiteilig aufgebaut, wobei die beiden Teile nach dem einbringen in die Statornuten an den axialen Enden des Stators herausstehen und der Überstand radial nach außen gewölbt ist. Durch diesen Überstand werden die Wickelköpfe des Stators abgedeckt und dadurch geschützt.

Schließlich ist in der EP 1 376 822 A1 ein Elektromotor beschrieben, bei dem zwischen dem Stator und dem Rotor eine starre Isolierhülle vorgesehen ist, die so angeordnet ist, dass der Stator von einem flüssigen Medium geschützt wird.

Insbesondere ist die Isolierhülle an der Eintrittsseite des flüssigen Mediums mit dem Gehäuse des Motors am Rand verbunden, verläuft über die Länge des Stators zwischen dem Stator und dem Rotor und ist am gegenüberliegenden Ende verschlossen. An diesem verschlossenen Ende ist in der Isolierhülle ein Lager für die Welle des Rotors vorgesehen.

Der Nachteil dieser bekannten Elektromotoren besteht darin, dass bei einer Isolierung des Rotors, wie diese in der DE 1 797 835 U beschrieben ist, gegebenenfalls durch die Statornuten fallende Metallteile ungehindert zu dem Spalt zwischen Stator und Rotor gelangen können und dort gegebenenfalls zu einem Blockieren des Rotors führen können. Ist der zusätzliche Nutenschließer für den Stator vorgesehen, der in diesem Dokument beschrieben wird, so kann der Stator nicht hinreichend gekühlt werden, da der Überstand des Nutenschließers die Stirnseiten des Stators abdeckt. Bei der in der EP 1 376 822 A1 beschriebenen Isolierhülle wird ebenfalls das Eintreten von Partikeln, insbesondere Metallpartikeln in den Luftspalt zwischen dem Rotor und dem Stator und ein dadurch gegebenenfalls hervorgerufenes Blockieren des Rotors nicht verhindert.

Aufgabe der vorliegenden Erfindung ist es somit eine Lösung zu schaffen, die einen störungsfreien Betrieb eines Elektromotors auch bei Vorliegen von metallischen Verunreinigungen in der Umgebung des Elektromotors ermöglicht, ohne zu einer Temperaturerhöhung in dem Motor zu führen. Erfindungsgemäß wird diese Aufgabe gelöst durch eine Rotorabdeckung gemäß Anspruch 1 und einem Elektromotor gemäß Anspruch 4. Weitere vorteilhafte Ausgestaltungen der Erfindung sind Gegenstand der abhängigen Ansprüche 2 und 3 sowie 5-8.

Insbesondere ist das Lagerschild ein vorderes Lagerschild, das in Strömungsrichtung eines durch den Elektromotor hindurchströmenden oder in diesen eintretenden Medium bzw. in Fallrichtung von insbesondere metallischen Schmutzpartikeln das erste Lagerschild ist. Die Verwendung einer Kappe als vorderes Teil der Rotorabdeckung bringt insbesondere den Vorteil mit sich, dass diese einfach, beispielsweise durch Tiefziehen oder Spritzguss, hergestellt werden kann. Indem die Abdeckkappe den Bereich zwischen dem vorderen Lagerschild und der Stirnseite des Stators abdeckt, wird in diesem Zwischenraum eine klare Trennung zwischen dem Statorbereich und dem Rotorbereich festgelegt. Während ein Eintritt des durchströmenden Mediums in den Stator ermöglicht wird, wird ein Anströmen des Rotors und insbesondere des Luftspaltes zwischen dem Rotor und dem Stator verhindert. Somit können in diesen Luftspalt auch keine Partikel eingetragen werden, die zu einem Blockieren des Rotors führen könnten.

Die Abdeckkappe ist an dem Lagerschild benachbart zu dem Durchlass für die Rotorwelle des Elektromotors angebracht. Die Anbringung der Abdeckkappe kann durch Aufstecken auf einen geeigneten Vorsprung an der Innenseite des Lagerschildes erfolgen. Die Kappe umgibt somit den Durchlass für die Rotorwelle konzentrisch. Indem die Abdeckkappe benachbart zu diesem Durchlass der Rotorwelle angebracht ist, wird der Teil des Lagerschildes, in dem Einlassöffnungen für das Kühlmedium vorgesehen werden können und der Statorbereich in den das Kühlmedium eintreten kann maximiert. Zudem verläuft die Abdeckkappe von der Anbringstelle an dem Lagerschild zu dem Stator und zu der Statorinnenseite, so dass sich eine zu der Hauptströmungsrichtung geneigte Fläche ergibt, was zu verbesserten Strömungsverhältnissen führt.

Die Abdeckung weist Abdeckstege auf, die sich an die mindestens eine Abdeckkappe anschließen, deren Breite der Breite von Statornuten in dem Stator entspricht und deren Länge zumindest der Hälfte der Länge des Stators entspricht. Statornuten stellen in diesem Zusammenhang den Abstand zwischen zwei benachbarten Statorpolen dar. Als Breite der Statornuten wird insbesondere der Abstand zwischen benachbarten Statorpolen an der Innenseite des Stators bezeichnet. Die Länge des Stators bezeichnet die axiale Abmessung des Stators, der in der Regel aus einer Anzahl von Statorblechen gebildet ist. Durch das Vorsehen von Abdeckstegen kann auch ein radiales Eintreten von Partikeln in den Luftspalt zwischen Rotor und Stator verhindert werden. Der Luftspalt wird somit durch die Abdeckung zumindest in der Hauptströmungsrichtung bzw. in Fallrichtung metallischer Partikel und in radialer Richtung vollständig geschützt. Indem die Breite der Abdeckstege zumindest der Breite der Statornuten entspricht, können diese in die Statornuten aufgenommen werden und die Statornuten abdichten. Bevorzugt ist die Breite der Abdeckstege größer als die Breite der Statornuten an der Innenseite des Stators. Die Abdeckstege könne bei dieser Ausgestaltung in die sich von der Innenseite des Stators erweiternden Statornuten eingebracht werden, wodurch der Halt der Abdeckstege und die Abdichtung der Statornuten verbessert wird.

Die Abdeckstege sind mit der mindestens einen Abdeckkappe verbunden. Die Verbindung kann über an der Abdeckkappe vorgesehene Vertiefungen erfolgen, in denen die Abdeckstege aufgenommen und befestigt, beispielsweise verklebt oder verschweißt, werden können. Alternativ können die Abdeckstege an der Abdeckkappe einstückig angeformt sein. Bei dieser Ausführungsform ist das Einbringen der Rotorabdeckung weiter vereinfacht, da die Abdeckung nach der Herstellung nur aus einem Teil besteht.

Die Abdeckstege können alternativ auch aus Isolationsfolie bestehen. Die Abdeckstege können bei dieser Ausführungsform die Form von Rinnen oder Wannen aufweisen. Diese werden unmittelbar an den Statornuten vorgesehen und die Abdeckkappe ist bei dieser Ausführungsform in der Regel ein separates Bauteil, das gegebenenfalls mit der Innenseite des Stators eingreift.

Die Rotorabdeckung kann auch zwei Abdeckkappen umfassen, die an gegenüberliegenden Lagerschilden angebracht sind. Bei dieser Ausführungsform wird der Eintritt von Partikeln in den Luftspalt auch von der der Hauptströmungsrichtung bzw. der Fallrichtung der Partikel abgewandten Seite verhindert. Diese Ausführungsform, insbesondere in Verbindung mit Abdeckstegen, kann bei einem Einbauort eines Elektromotors, an dem keine gerichtete Strömung herrscht vorteilhaft sein.

Der Elektromotor kann gemäß einer Ausführungsform einen Pumpenmotor mit darin integrierter Pumpe darstellen. Besonders für Haushaltsgeräte, insbesondere wasserführende Haushaltsgeräte, wie Waschmaschinen oder Geschirrspülmaschinen eignet sich der erfindungsgemäße Elektromotor. Weiterhin kann der Elektromotor auch als Antriebsmotor für ein wasserführendes Haushaltsgerät dienen.

Besonders für Synchronmotoren ist die erfindungsgemäße Rotorabdeckung geeignet. Bei diesen Motoren muss ein Anziehen von metallischen Partikeln durch den magnetischen Rotor vermieden werden. Gleichzeitig ist aber durch die Abdeckung des Rotors wegen der geringeren Rotortemperatur als bei Asynchronmotoren eine Kühlung des Motors entbehrlich.

Die Rotorabdeckung besteht vorzugsweise aus einem dielektrischen und unmagnetischen Material, wie beispielsweise Kunststoff.

Merkmale und Vorteile, die in Bezug auf den Elektromotor beschrieben werden gelten -soweit anwendbar- entsprechend für die Rotorabdeckung und umgekehrt.

Die Erfindung wird im Folgenden erneut anhand der beiliegenden Zeichnungen beschrieben. Es zeigen:
Figur 1: eine schematische Schnittansicht einer Ausführungsform eines erfindungsgemäßen Motors;
Figur 2: eine schematische perspektivische Ansicht von Lagerschilden mit Abdeckkappen ohne Abdeckstege;
Figur 3: eine perspektivische Ansicht einer Ausführungsform einer erfindungsgemäßen Rotorabdeckung;
Figur 4: eine perspektivische Explosionsansicht einer weiteren Ausführungsform einer erfindungsgemäßen Rotorabdeckung; und
Figur 5: eine perspektivische Explosionsansicht einer weiteren Ausführungsform einer erfindungsgemäßen Rotorabdeckung.

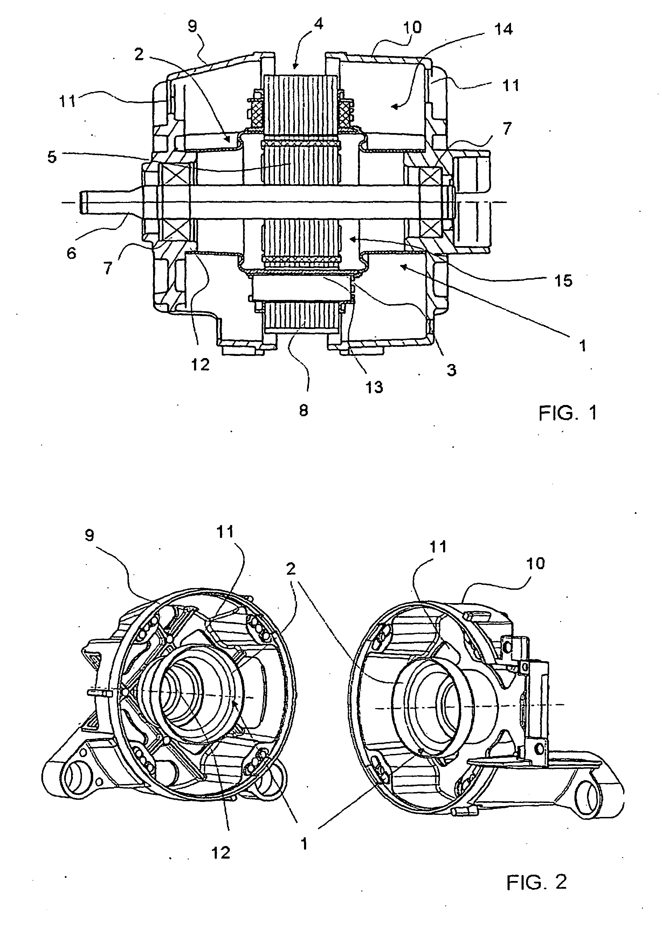

In Figur 1 ist eine Rotorabdeckung 1 gezeigt, die zwei Abdeckkappen 2 und zwischen diesen liegende Abdeckstege 3 umfasst. Die Rotorabdeckung 1 ist in einen Elektromotor 4 eingebracht. Der Elektromotor 4, ist ein Innenläufermotor mit einem Rotor 5, der auf einer Welle 6 gehalten ist. Die Welle 6 ist in Lagern 7 gehalten. Um den Rotor 5 liegt der Stator 8.

Der Motor 4 umfasst ferner ein vorderes Lagerschild 9 und ein hinteres Lagerschild 10, die beide topfartig ausgestaltet sind und die Stirnseiten des Stators 8 und des Rotors 5 abdecken. In den Lagerschilden 9 und 10 sind die Lager 7 über die die Welle 6 des Rotors 5 gelagert ist. Weiterhin sind die Lagerschilde 9 und 10 durchlässig ausgestaltet und weisen insbesondere Öffnungen 11 vorgesehen, durch die ein den Motor umströmendes Medium, insbesondere eine Flüssigkeit oder Luft den Motor 4 zumindest teilweise durchströmen kann.

An der Innenseite der Lagerschilde 9 und 10 sind im Bereich des Durchlasses für die Welle 6 Vorsprünge 12 vorgesehen, die ringförmig um den Durchlass in Richtung auf den Motor 4 vorstehen. Die Abdeckkappen 2 sind auf diese Vorsprünge 12 aufgesteckt, das heißt umschließen diese Vorsprünge 12. Von dem Lagerschild 9 erstreckt sich die vordere Abdeckkappe 2 bis zu der Stirnseite des Stators 8.

Die sich an die Abdeckkappen 2 anschließenden Abdeckstege 3 liegen in den Statornuten 13 des Stators 8 und dichten diese ab. Durch die Abdeckkappen 2 und die Abdeckstege 3 wird zusammen mit den Innenseiten der Statorpole zwischen denen die Abdeckstege angeordnet sind, ein Statorbereich 14 gegenüber einem Rotorbereich 13 abgegrenzt, wobei der Rotorbereich 13 auch den Luftspalt zwischen dem Rotor und dem Stator umfasst. Da die Öffnungen 11 in den Lagerschilden 9 und 10 im Statorbereich 14 liegen, kann dieser ausreichend gekühlt werden. Gleichzeitig wird durch die Rotorabdeckung 1 ein Eintreten von Partikeln, insbesondere von Metallpartikeln in den Luftspalt zwischen Rotor und Stator verhindert.

In Figur 2 ist eine Ausführungsform der Lagerschilde des Motors gezeigt mit an den Lagerschilden 9 und 10 angebrachten Abdeckkappen 2, die an den Vorsprüngen 12 an den Innenseiten der Lagerschilde 9 und 10 vorgesehen sind ohne Abdeckstege 3. Abdeckkappen als solche ohne die Abdeckstege sind nicht Teil der beanspruchten Erfindung.

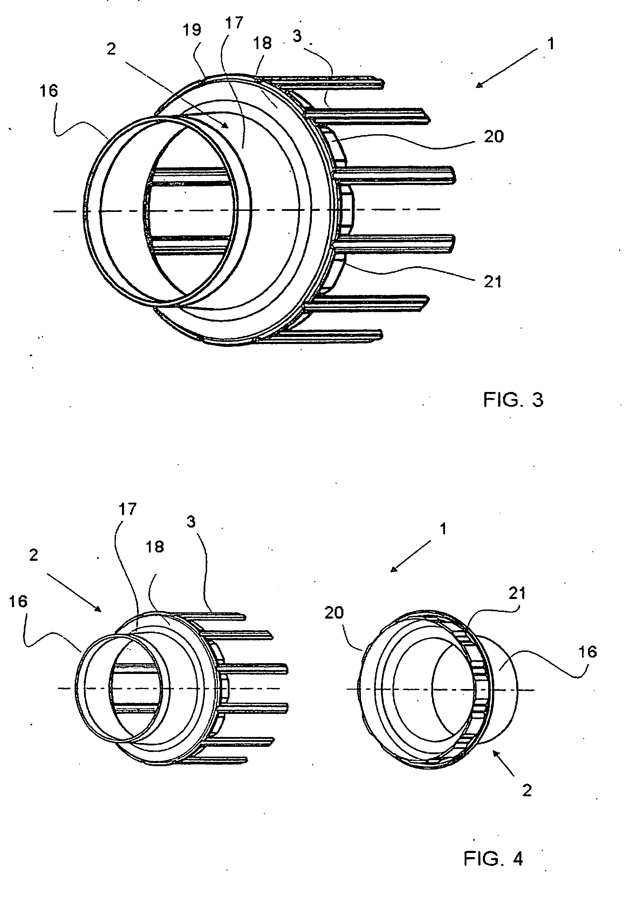

In Figur 3 ist eine Ausführungsform einer erfindungsgemäßen Rotorabdeckung 1 gezeigt. Die Abdeckkappe 2 weist eine im Wesentlichen konische Form auf. An der Vorderseite besteht die Abdeckkappe aus einer zylindrischen Buchse, über die die Abdeckkappe 2 mit dem Vorsprung 12 der Lagerschilde 9 und 10 in Eingriff gebracht werden kann. An diese Buchse 16 schließt sich ein konischer Bereich 17 an, der in einen im Wesentlichen senkrecht zu der Achse der Abdeckkappe 2 liegenden Abdeckring 18 übergeht. Über den Umfang des Abdeckrings 18 sind Vertiefungen 19 vorgesehen, in die Abdeckstege 3, die mit der Abdeckkappe 2 verbunden werden, eingreifen können. An der der Buchse 16 abgewandten Seite des Abdeckrings 18 erstreckt sich ein Flansch 20. In diesem Flansch 20 sind Rillen 21 vorgesehen, in denen die Abdeckstege 3 gehalten werden. Hierdurch wird die Verbindung zwischen der Abdeckkappe 2 und den Abdeckstegen 3 verbessert. Die Abdeckstege 3 sind in der dargestellten Ausführungsform der Figur 3 Profilteile, die mit der Abdeckkappe 2 verbunden sind. Die Profile sind so gewählt, dass diese der Form der Statornuten 13 an deren dem Rotor 5 zugewandten Ende entsprechen. Insbesondere sind die Abdeckstege 3 als Rinnen ausgelegt, die in die Statornuten 13 eingeführt werden können und mit deren Rinnenboden die Breite der Statornuten 13 an dem Rotor 5 zugewandten Ende abdecken. Die Anzahl der Abdeckstege 3 entspricht der Anzahl der in dem Stator 8 vorliegenden Statornuten 13.

In der Figur 4 ist eine weitere Ausführungsform der erfindungsgemäßen Rotorabdeckung 1 gezeigt. Diese entspricht im Wesentlichen der Ausführungsform der Figur 3, weist allerdings eine zweite Abdeckkappe 2 auf, die auf die freien Enden der Abdeckstege 3 aufgesetzt werden kann. Das Aufbringen der Rotorabdeckung 1 erfolgt bei dieser Ausführungsform in zwei Schritten. Zunächst wird die Abdeckkappe 2, an der die Abdeckstege 3 vorgesehen sind, von einer Seite in die Statornuten 13 eingeführt, bis die Abdeckstege 3, die eine Länge aufweisen, die im Wesentlichen der axialen Länge des Stators 8 entspricht, vollständig in den Statornuten 13 liegen. Anschließend wird die zweite Kappe 2 auf den Stator 8 aufgesetzt und die Rillen 21 in dem Flansch 20 greifen mit den Abdeckstegen 3 ein.

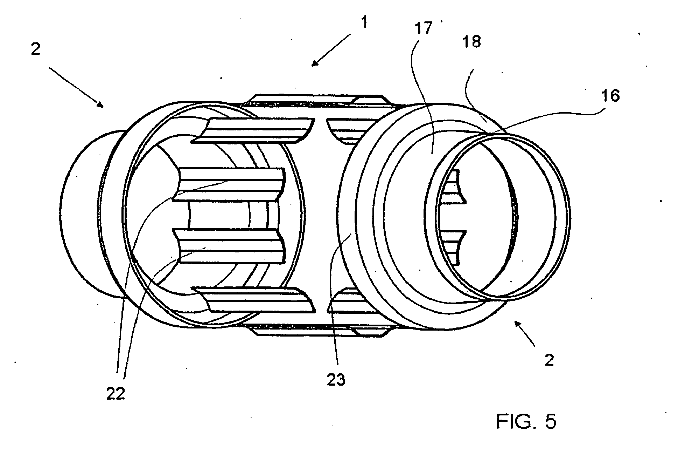

In der Figur 5 ist eine weitere Ausführungsform der erfindungsgemäßen Rotorabdeckung 1 gezeigt. Bei dieser Ausführungsform sind die Abdeckstege durch Isolierstreifen 22 ersetzt, die in die Statornuten 13 eingebracht werden und im Wesentlichen eine Rinnenform aufweisen. Von diesen getrennt weist die Rotorabdeckung 1 zwei Abdeckkappen 2 auf, die im Wesentlichen den in Bezug auf die Figur 3 beschriebenen Aufbau aufweisen. Allerdings ist bei dieser Ausführungsform der Flansch nicht mit Rillen versehen sondern stellt einen an dem Außenumfang des Abdeckrings 18 vorgesehenen durchgehenden Flansch 23 dar.

Bei dieser Ausführungsform können zunächst die Isolierstreifen 22 in die Statornuten 13 eingebracht werden und anschließend die Abdeckkappen 2 an den Stator 8 angebracht werden. Der Flansch 23 des Abdeckrings 18 greift hierbei vorzugsweise in den Innendurchmesser des Stators 8 ein.

Mit der vorliegenden Erfindung wird es somit möglich mittels der Rotorabdeckung zusammen mit den Lagerschilden und den Statorzähnen beziehungsweise Statorpolen eine geschlossene Rotorkammer zu erzeugen, durch die ein Eintreten von Partikeln, insbesondere metallischen Partikeln in den Luftspalt des Motors, verhindert werden kann, wodurch der Magnetrotor des Motors blockiert werden würde.

Weiterhin erlaubt die vorliegende Erfindung den Einsatz von Lagerschilden, in denen Belüftungsöffnungen vorgesehen sind, wodurch eine bessere Motorkühlung und dadurch eine höhere Motorleistung erzielt werden kann.

## Patentansprüche

1. Rotorabdeckung zur Abdeckung des Rotors (5) eines Elektromotors (4), die zumindest eine Abdeckkappe (2) und sich an die Abdeckkappe (2) anschließende Abdeckstege (3) umfasst, **dadurch gekennzeichnet, dass** die Abdeckkappe (2) an einem Lagerschild (9) des Elektromotors (4) benachbart zu dem Durchlass für eine Rotorwelle (6) anbringbar ist, dass die Abdeckkappe (2) sich von der Seite, an der die Abdeckstege (3) angebracht sind, aus verjüngt und die Abdeckstege (3) eine Länge aufweisen, die zumindest der Hälfte der Länge des Stators (8) des Elektromotors (4) entspricht, und dass die Breite der Abdeckstege (3) der Breite von Statornuten (13) in dem Stator (8) des Elektromotors (4) entspricht.

2. Rotorabdeckung nach Anspruch 1, **dadurch gekennzeichnet, dass** die mindestens eine Abdeckkappe (2) mit den Abdeckstegen (3) einteilig ausgestaltet ist.

3. Rotorabdeckung nach einem der Ansprüche 1 oder 2, **dadurch gekennzeichnet, dass** die Abdeckstege (3) aus Isolationsfolie bestehen.

4. Elektromotor mit einem Rotor (5), einem den Rotor (5) umgebenden Stator (8), mindestens einem Lagerschild (9, 10) und einer Rotorabdeckung (1) gemäß einem der Ansprüche 1 bis 3, **dadurch gekennzeichnet, dass** die Abdeckkappe (2) an dem Lagerschild (9) benachbart zu dem Durchlass für eine Rotorwelle (6) angebracht ist.

5. Elektromotor nach Anspruch 4, **dadurch gekennzeichnet, dass** sich die Abdeckkappe (2) von dem Lagerschild (9) zumindest bis zu der diesem Lagerschild (9) zugewandten Stirnseite des Stators (8) erstreckt.

6. Elektromotor nach einem der Ansprüche 4 oder 5, **dadurch gekennzeichnet, dass** die Rotorabdeckung (1) zwei Abdeckkappen (2) umfasst, die an gegenüberliegenden Lagerschilden (9, 10) angebracht sind.

7. Elektromotor nach einem der Ansprüche 4 bis 6, **dadurch gekennzeichnet, dass** dieser einen Pumpenmotor (4) darstellt.

8. Elektromotor nach einem der Ansprüche 4 bis 7, **dadurch gekennzeichnet, dass** dieser einen Antriebsmotor (4) für ein wasserführendes Haushaltsgerät darstellt.

## Claims

1. Rotor cover for covering the rotor (5) of an electric motor (4), which comprises at least one cover cap (2) and cover webs (3) connected with the cover cap (2), **characterised in that** the cover cap (2) can be mounted at an end plate (9) of the electric motor (4) adjacent to the passage for a rotor shaft (6), that the cover cap (2) tapers from the side at which the cover webs (3) are mounted and the cover webs (3) have a length which corresponds with at least half the length of the stator (8) of the electric motor (4) and that the width of the cover webs (3) corresponds with the width of stator grooves (13) in the stator (8) of the electric motor (4).

2. Rotor cover according to claim 1, **characterised in that** the at least one cover cap (2) is formed integrally with the cover webs (3).

3. Rotor cover according to one of claims 1 and 2, **characterised in that** the cover webs (3) consist of insulating film.

4. Electric motor with a rotor (5), a stator (8) surrounding the rotor (5), at least one end plate (9, 10) and a rotor cover (1) according to any one of claims 1 to 3, **characterised in that** the cover cap (2) is mounted on the end plate (9) adjacent to the passage for a rotor shaft (6).

5. Electric motor according to claim 4, **characterised in that** the cover cap (2) extends from the end plate (9) at least up to the end face of the stator (8) facing this end plate (9).

6. Electric motor according to one of claims 4 and 5, **characterised in that** the rotor cover (1) comprises two cover caps (2) which are mounted on opposite end plates (9, 10).

7. Electric motor according to any one of claims 4 to 6, **characterised in that** this represents a pump motor (4).

8. Electric motor according to any one of claims 4 to 7, **characterised in that** this represents a drive motor (4) for a water-conducting domestic appliance.

## Revendications

1. Elément de recouvrement de rotor pour recouvrir le rotor (5) d'un moteur électrique (4), qui comprend au moins un couvercle (2) et des segments de couverture (3) adjacents au couvercle (2), **caractérisé en ce que** le couvercle (2) peut être fixé sur une flasque-palier (9) du moteur électrique (4), de manière voisine au passage pour un arbre de rotor (6), **en ce que** le couvercle (2) se rétrécit à partir du côté sur lequel les segments de couverture (3) sont placés et les segments de couverture (3) ont une longueur qui correspond au moins à la moitié de la longueur du stator (8) du moteur électrique (4) et **en ce que** la largeur des segments de couverture (3) correspond à la largeur de rainures de stator (13) dans le stator (8) du moteur électrique (4).

2. Elément de recouvrement de rotor selon la revendication 1, **caractérisé en ce que** l' au moins un couvercle (2) est exécuté d'une seule pièce avec les segments de couverture (3).

3. Elément de recouvrement de rotor selon l'une des revendications 1 ou 2, **caractérisé en ce que** les segments de couverture (3) sont formés d'une feuille isolante.

4. Moteur électrique comprenant un rotor (5), un stator (8) entourant le rotor (5), au moins une flasque-palier (9, 10) et un élément de recouvrement de rotor (1) selon l'une des revendications 1 à 3, **caractérisé en ce que** le couvercle (2) est fixé sur la flasque-palier (9) de manière voisine au passage pour un arbre de rotor (6).

5. Moteur électrique selon la revendication 4, **caractérisé en ce que** le couvercle (2) s'étend de la flasque-palier (9) au moins jusqu'au côté frontal du stator (8) tourné vers cette flasque-palier (9).

6. Moteur électrique selon l'une des revendications 4 ou 5, **caractérisé en ce que** l'élément de recouvrement de rotor (1) comprend deux couvercles (2) qui sont fixés sur des flasques-paliers opposées (9, 10).

7. Moteur électrique selon l'une des revendications 4 à 6, **caractérisé en ce que** ce moteur représente un moteur de pompe (4).

8. Moteur électrique selon l'une des revendications 4 à 7, **caractérisé en ce que** ce moteur représente un moteur d'entraînement (4) pour un appareil ménager à circulation d'eau.
